# EUROPÄISCHE PATENTSCHRIFT

(11) **EP 1 165 409 B1**
(45) Veröffentlichungstag und Bekanntmachung des Hinweises auf die Patenterteilung: **06.08.2003**
(21) Anmeldenummer: 00922590.5
(22) Anmeldetag: 31.03.2000
(51) Int. Cl.: B65G 13/10

(54) **WEICHE FÜR EIN FÖRDERSYSTEM, INSBESONDERE FÜR EINEN ROLLENFÖRDERER**
POINTS FOR A FEEDING SYSTEM, ESPECIALLY A GRAVITY ROLLER TABLE
MECANISME D'AIGUILLAGE POUR SYSTEME DE TRANSPORT, NOTAMMENT POUR TRANSPORTEUR A ROULEAUX

(30) Priorität: 31.03.1999 DE 19914582; 07.05.1999 DE 19921131
(43) Veröffentlichungstag der Anmeldung: 02.01.2002
(73) Patentinhaber: Gebhardt Fördertechnik GmbH, D-74889 Sinsheim (DE)
(72) Erfinder: GEBHARDT, Günter, D-74915 Waibstadt (DE)
(74) Vertreter: Mierswa, Klaus
(86) Internationale Anmeldenummer: EP0002892
(87) Internationale Veröffentlichungsnummer: WO00059811

(56) Entgegenhaltungen:
- EP-A- 0 251 391
- US-A- 4 598 815
- US-A- 4 746 003

## Beschreibung

### Technisches Gebiet:

Die Erfindung betrifft eine Weiche für ein Fördersystem, insbesondere für einen Rollenförderer, die zwischen einer Geradeaus-Stellung und einer Umlenkstellung zum Umlenken von Fördergut von einem Hauptförderer zu einem vom Hauptförderer abzweigenden Nebenförderer umstellbar ist.

### Stand der Technik:

Aus der europäischen Patentanmeldung EP 0311699 A1 ist eine Transporteinrichtung mit einer Weiche bekannt, die Module mit Rollenkörpern aufweist. Die Rollenkörper bilden dabei eine Ebene mit den übrigen Förderrollen und können einerseits eine lineare Fördereinheit zusammen mit den vorgeordneten Förderrollen bilden, andererseits durch Drehen um ihre eigenen Vertikalachsen gegenüber dem linearen Förderverbund gedreht werden. Soll das Fördergut auf den abzweigenden Nebenförderer umgelenkt werden, so werden die Rollenkörper der Weiche entsprechend dem Ausschleuswinkel gedreht. Wird Fördergut mit großer Bodenfläche transportiert, so stützt sich nur ein kleiner Teil des Gewichts des Fördergutes auf den Rollenkörpern der Weiche ab, so daß sich die Umlenkkräfte gegenüber den in Förderrichtung wirkenden Kräften des Hauptförderers nicht oder nicht sicher durchsetzen können. Daraus können entweder ein Versagen der Weiche oder eine unkontrollierbare Drehung des Fördergutes resultieren, die ihrerseits zu einem Förderstau führen kann, wenn sich das Fördergut an ungünstiger Stelle auf der Rollenbahn verkantet.

Aus der EP-A-0 251 391 ist eine Fördervorrichtung bekannt geworden, welche eine Gabel aufweist, in der ein Rollenkörper mit vertikaler Rotationsachse gelagert ist. An der Gabel ist ein vertikal verlaufender Lagerbolzen angeordnet, welcher in eine Lagerbuchse eingeführt ist, so daß die Gabel um die Achse des Lagerbolzens rotierbar ist. Die gabelseitige Stirnfläche der Lagerbuchse weist eine Vertiefung auf. Der Lagerbolzen weist unterhalb der Gabel einen horizontal abstehenden Querbolzen auf, welcher eine um den Querbolzen rotierbare Rolle trägt, die bei einer bestimmten Stellung der Gabel in die Vertiefung der Lagerbuchse eingreift, so daß die Gabel in dieser Stellung abgesenkt ist und bei einer Drehung der Gabel aus dieser Stellung heraus angehoben wird.

Aus der US 4 598 815 A ist eine Ablenkvorrichtung für ein Förderband bekannt geworden, welche eine Reihe von angetriebenen schwenkbaren Rollen umfaßt. Die Ablenkvorrichtung besitzt einen Hebemechanismus, welcher die Rollen anheben und absenken kann, und einen hiermit synchronisierten Schwenkmechanismus, der die Rollen bei jedem Hebevorgang in eine Ablenkstellung und bei jedem Senkvorgang in eine Geradeaus-Stellung schwenkt. Der Oberbegriff des Anspruchs 1 entspricht diesem Stand der Technik.

Der Erfindung liegt die Aufgabe zu Grunde, eine gut und zuverlässig funktionierende Weiche für ein Fördersystem bereitzustellen, wobei die Weiche kostengünstig herstellbar und eine Nachrüstung bestehender Fördersysteme mit der Weiche auf einfache Weise möglich ist.

Diese Aufgabe wird erfindungsgemäß gelöst durch eine Weiche für ein Fördersystem, insbesondere für einen Rollenförderer, die zwischen einer Geradeaus-Stellung und einer Umlenkstellung zum Umlenken von Fördergut von einem Hauptförderer auf einen vom Hauptförderer abzweigenden Nebenförderer umstellbar ist, umfassend eine Gruppe von Rollenkörpern mit horizontal verlaufenden Rotationsachsen, wobei die Rollenkörper an je einer Gabel um ihre Rotationsachsen rotierbar angeordnet sind und jede Gabel einen von der Gabel vertikal nach unten abstehend angeordneten Lagerbolzen aufweist, welcher von oben her in eine vertikal angeordnete, oben offene Lagerbuchse eines an der Schwenkbewegung nicht teilnehmenden Lagerbocks eingeführt ist, so daß die Gabel zwischen einer ersten und einer zweiten Stellung um eine vertikale Schwenkachse schwenkbar in dem Lagerbock gelagert ist, wobei sich die Weiche in der Geradeaus-Stellung befindet, wenn sich die Gabeln jeweils in der ersten Stellung befinden, und sich die Weiche in der Umlenkstellung befindet, wenn sich die Gabeln jeweils in der zweiten Stellung befinden, wobei die Gabeln während der Umschwenkens von der ersten in die zweite Stellung durch einen Hubmechanismus so angehoben werden, daß das Fördergut beim Passieren der Weiche durch mindestens einen der Rollenkörper zumindest teilweise gegenüber dem Fördersystem angehoben wird, dadurch gekennzeichnet, daß
- entweder die Gabel (30) eine im oberen Endbereich des Lagerbolzens (36) angeordnete, an ihrer Unterseite (11) Vertiefungen (72) aufweisende Kopfplatte (35) aufweist und die Wandung der Lagerbuchse (24) oben durch eine Auswölbungen (76) aufweisende obere Stirnfläche (25) begrenzt ist, wobei der Lagerbolzen (36) zur um eine vertikale Achse schwenkbaren Lagerung der Gabel (30) von oben her in die Lagerbuchse (24) eingeführt ist und die Unterseite (11) nur in der ersten Stellung auf der oberen Stirnfläche (25) aufliegt, wobei die Auswölbungen (76) und die Vertiefungen (72) so angeordnet sind, daß Auswölbungen (76) in der ersten Stellung der Gabel (30) in die Vertiefungen (72) eingreifen und in der zweiten Stellung der Gabel (30) nicht in die Vertiefungen (72) eingreifen, so daß sich die Gabel (30) in der zweiten Stellung in einer gegenüber ihrer Position in der ersten Stellung um die Tiefe der Vertiefungen (72) oder Höhe der Auswölbungen (76) angehobenen Position befindet,
- oder die Gabel (30) eine im oberen Endbereich des Lagerbolzens (36) angeordnete Kopfplatte (35a) aufweist, deren Unterseite (12) plan und gegenüber der Horizontalen geneigt ist, und die Wandung der Lagerbuchse (24a) oben durch eine plane, gegenüber der Horizontalen geneigte obere Stirnfläche (26) begrenzt ist, wobei der Lagerbolzen (36) zur um eine vertikale Achse schwenkbaren Lagerung der Gabel (30) von oben her in die Lagerbuchse (24) eingeführt ist und die Unterseite (12) nur in der ersten Stellung auf der oberen Stirnfläche (26) aufliegt, wobei die räumliche Lage der Unterseite (12) und der oberen Stirnfläche (26) so zueinander orientiert sind, daß sich die Gabel (30) in der zweiten Stellung in einer gegenüber ihrer Position in der ersten Stellung angehobenen Position befindet,
- oder der Lagerbock (120) Vertiefungen (82) und die Gabel (130) eine Drehplatte (131) mit Auswölbungen (86) aufweist, wobei die Drehplatte (131) nur in der ersten Stellung auf der oberen Stirnfläche der Lagerbuchse (124) aufliegt und die Auswölbungen (86) in der ersten Stellung der Gabel ( 130) in die Vertiefungen (82) eingreifen und in der zweiten Stellung der Gabel (130) außerhalb der Vertiefungen (82) auf dem Lagerbock (120) aufliegen, so daß sich die Gabel (130) in der zweiten Stellung in einer gegenüber ihrer Position in der ersten Stellung um die Tiefe der Vertiefungen (82) oder Höhe der Auswölbungen (86) angehobenen Position befindet.

In der Geradeaus-Stellung der erfindungsgemäßen Weiche verlaufen die Rotationsachsen der Rollenkörper quer zur Längsrichtung des Hauptförderers, wobei die Rollenkörper bevorzugt in einer Ebene mit der übrigen Förderebene des Hauptförderers liegen und entlang desselben der geradlinigen Beförderung des Fördergutes dienen.

In der Umlenkstelllung jedoch verlaufen die Rotationsachsen der Rollenkörper so, daß das Fördergut auf den Nebenförderer umgelenkt wird. Die Rollenkörper sind hierbei erfindungsgemäß gegenüber ihrer Position bei Geradeaus-Stellung der Weiche angehoben und stehen erfindungsgemäß über die übrige Förderebene des Hauptförderers nach oben vor, so daß das Fördergut beim Passieren der Weiche zumindest teilweise angehoben wird, wobei vorteilhafterweise zwischen Fördergut und Rollenkörper eine gegenüber der Geradeaus-Stellung erhöhte Auflagekraft entsteht und somit die Umlenkkraft der Rollenkörper in dieser Stellung der Weiche in erhöhtem Maße zur Wirkung kommt.

Das Ergebnis ist eine richtungsgenaue Umlenkung des Fördergutes auch bei hohen Fördergeschwindigkeiten.

Die Gabeln mit den von ihnen getragenen Rollenkörpern werden erfindungsgemäß durch einen Hubmechanismus, der während der Umstellung der Weiche von der Geradeaus-Stellung in die Umlenkstellung zur Wirkung kommt, in eine solche angehobene, über die übrige Förderebene vorstehend Position gebracht. Die hierzu erforderliche Hubbewegung der Gabeln wird mit Hilfe eines Hubmechanismus unmittelbar aus der Schwenkbewegung der Module von der Geradeaus-Stellung in die Umlekstellung abgeleitet, so daß Hubbewegung aufgrund der Schwenkbewegung der Gabeln in die Umlenkstellung erfolgt. Der hierbei zugrunde liegende Hubmechanismus ist vorteilhafterweise sehr einfach und mit geringem konstruktiven Aufwand realisierbar.

Die Gabel weist einen vertikal angeordneten zylindrischen Lagerbolzen auf. Die schwenkbare Lagerung der Gabel erfolgt dabei mit Hilfe eines am Fördersystem angebrachten Lagerbocks, der eine Lagerbuchse mit vertikal verlaufender oben offener zylindrischer Bohrung und einen Befestigungssockel umfaßt, welcher mit der Lagerbuchse verbunden ist und zur Befestigung derselben an der Förderanlage dient. Der Lagerbolzen ist um seine vertikale Achse in der Lagerbuchse aufgenommen, so daß die Gabel und damit auch der von ihr getragene Rollkörper um diese Achse schwenkbar im Lagerbock gelagert sind.

Die den Lagerbock, die Gabel und den Rollenkörper umfassende Baugruppe wird im folgenden als Modul bezeichnet.

Ein Vorteil des beschriebenen Aufbaus der Module besteht in ihrer einfachen und somit kostengünstigen Herstellbarkeit. Ein weiterer Vorteil des beschriebenen Aufbaus der Module besteht darin, die Gabeln auf einfache Weise gegen solche mit anderen Rollenkörpern auszutauschen. Auf diese Weise kann nicht nur schnell und mit geringem Aufwand eine Umrüstung der Weiche z.B. auf Transportgüter mit speziellen Eigenschaften wie z.B. besonders hohem Gewicht erfolgen, sondern es kann z.B. auch im Bedarfsfall für verschiedene Fördersysteme die gleiche Weiche mit jeweils geeigneten Rollenkörpern verwendet werden, was einem Baukasteriprinzip gleichkommt.

Zur Umstellung der erfindungsgemäßen Weiche zwischen Geradeaus- und Umlekstellung dient bevorzugterweise eine geeignete Verstelleinrichtung. Diese kann als Verstellmechanismus ausgebildet sein, der über eine gemeinsame Koppelstange zugleich auf mehrere oder alle Module wirkt, wobei die Koppelstange zur Umstellung der Weiche z.B. mit Hilfe eines elektrischen, elektromagnetischen, pneumatischen oder hydraulischen Stellantriebes oder z.B. durch einen manuell betätigten Stellantrieb bewegt werden kann.

Eine andere Möglichkeit besteht darin, die Weiche so einzurichten, daß die Module durch je eine eigene Verstelleinrichtung einzeln verstellbar sind, wodurch sich als zusätzlicher Vorteil ergibt, daß die Verstellwinkel der einzelnen Module bei Bedarf unabhängig voneinander gewählt und somit an besondere Erfordernisse oder an spezielle Eigenschaften wechselnder Arten von Fördergut angepaßt werden können.

In einer Ausführungsform der Erfindung weisen die Rollenkörper keinen eigenen Antrieb auf und fungieren somit im Fördersystem als passive Rollenkörper. Diese Ausführungsform kann z.B. geeignet sein für Fördersysteme, auf denen das Fördergut mit hoher Geschwindigkeit bewegt wird, oder für solche Abschnitte von Fördersystemen, die mit einem starken Gefälle in Fördertichtung behaftet sind.

In einer anderen Ausführungsform der Erfindung weisen die Rollenkörper einen eigenen Antrieb auf und unterstützen somit im Fördersystem aktiv die Traktion des Fördergutes insbesondere zur Umlenkung auf den Nebenförderer. Bevorzugterweise weist der Rollenkörper hierbei eine Riemenscheibe auf, die gegenüber dem äußeren Umfang des Rollenkörpers versenkt angeordnet ist, so daß der Rollenkörper durch einen Endlos-Treibriemen angetrieben werden kann, der vollständig, einschließlich seiner äußeren Umlauffläche, unterhalb der Förderebene liegt, also nicht mit dem Fördergut in Berührung kommt. Hierbei können mehrere oder alle Rollenkörper über je einen Treibriemen durch eine gemeinsame, unterhalb der Förderebenen angeordnete Antriebswelle angetrieben werden, die sich unterhalb der Module und der Tragkonsole befindet und um welche die Treibriemen geführt sind.

In einer weiteren Ausgestaltungsform ist der Rollenkörper als Felge ausgebildet, die mindestens einen als Lauffläche für das Fördergut fungierenden Radreifen trägt. Ein Vorteil einer solchen Anordnung besteht darin, daß der bzw. die Radreifen etwa bei Abnutzung leicht ersetzt werden können und bei Bedarf leicht z.B. gegen solche mit anderem Durchmesser oder anderen Material- oder Oberflächeneigenschaften (z.B. Radreifen mit Gummiauflage) austauschbar sind.

Die Module können zweckmäßigerweise nebeneinander auf einer gemeinsamen Tragkonsole angeordnet sein, welche quer zur Förderrichtung des Hauptförderers verläuft. Auf diese Weise wird vorteilhafterweise erreicht, daß eine in das Fördersystem einzusetzende Weiche an einem geeigneten Ort vormontiert werden kann, so daß die Montagezeit zum Einsetzen der Weiche in das Fördersystem und damit die hierzu erforderliche Stillstandszeit der Förderanlage wesentlich reduziert sind.

Die Erfindung ist nicht nur anwendbar bei Fördersystemen, die Fördergut ausschleusen sollen, sondern auch bei solchen, bei denen eine z.B. Verbreiterung, Reduzierung, Richtungsänderung oder Parallelversetzung des Förderstromes erwünscht ist. Auch in Sortieranlagen ist die Erfindung einsetzbar. Dabei können mit Hilfe der Erfindung auch ganze Weichenfelder gebildet werden, wobei ein Vorteil darin besteht, daß z.B. auf unterschiedlich große bzw. schere Fördergüter reagiert werden kann, ohne das Fördersystem aufwendig umrüsten zu müssen. Die erfindungsgemäße Weiche gliedert sich funktionsgerecht in den Förderverbund ein.

In den Unteransprüchen sind weitere zweckmäßige Ausgestaltungen der Erfindung angegeben.

In den Zeichnungen sind verschiedene bevorzugte Ausführungsformen der Erfindung schematisch dargestellt. Es zeigen:
- Figur 1: eine schematische Darstellung eines Haupt- und eines Nebenförderers mit einer Weiche in Draufsicht,
- Figur 2: eine Seitenansicht auf einen Hauptförderer im Bereich einer erfindungsgemäßen Weiche mit riemenangetriebenen Rollkörpern,
- Figur 3a: eine Draufsicht auf einen Hauptförderer im Bereich einer in Geradeaus-Stellung befindlichen erfindungsgemäßen Weiche, wobei die Walzen des Hauptförderers sowie der Nebenförderer und die Kopplungsstange weggelassen sind,
- Figur 3b: eine Draufsicht auf den Hauptförderer von Fig. 3a, wobei sich ein Modul in Umlenkstellung befindet, wobei die anderen Module sowie der Hebel und der Pneumatikzylinder von Fig. 3a weggelassen sind,
- Figur 4: eine Seitenansicht einer bevorzugten Ausführungsform eines Moduls,
- Figur 4a: eine vergrößerte Darstellung des unteren Gabelbereiches des Moduls von Fig. 4
- Figur 4b: eine vergrößerte Darstellung des unteren Gabelbereiches einer anderen Ausführungsform eines Moduls,
- Figur 5: eine Seitenansicht einer bevorzugten Ausführungsform eines Lagerbocks mit Blickrichtung quer zur Längsrichtung des Hauptförderers von Fig. 1
- Figur 6: eine Draufsicht auf den Lägerbock,
- Figur 7: eine Stirnansicht der Gabel des Moduls von Fig. 4,
- Figur 8: eine Seitenansicht der Gabel von Fig. 7,
- Figur 9: eine Draufsicht auf die Gabel von Fig. 7,
- Figur 10: eine Querschnittsdarstellung der Felge eines Moduls ohne Radreifen,
- Figur 11: eine Stirnansicht der Felge von Fig. 10,
- Figur 12: eine Querschnittsdarstellung eines kompletten Rollenkörpers eines Moduls,
- Figur 13: eine Stirnansicht des Rollenkörpers von Figur 12,
- Figur 14: eine Koppelstange zur mechanischen Kopplung der Verdrehung mehrerer Module,
- Figur 15: eine Draufsicht auf einen Hebel zur gelenkigen Verbindung der Gabel mit der Koppelstange,
- Figur 16: eine Seitenansicht des Hebels aus der in Figur 15 mit "A" bezeichneten Richtung,
- Figur 17: eine Seitenansicht einer Tragkonsole zur mechanischen Aufnahme mehrerer Module mit Blickrichtung in Längsrichtung des Hauptförderers von Fig. 1,
- Figur 18: eine Draufsicht auf die Tragkonsole von Figur 17,
- Figur 19: eine Stirnansicht der Tragkonsole von Figur 17,
- Figur 20: eine Querschnittsdarstellung eines Moduls mit einer weiteren Ausführungsform von Hubmitteln,
- Figur 21: eine Stirnansicht einer Gabel des Moduls von Fig. 20,
- Figur 22: eine Seitenansicht der Gabel von Figur 21,
- Figur 23: eine Draufsicht der Gabel von Figur 21,
- Figur 24: eine Seitenansicht einer weiteren Ausführungsform eines Lagerbocks mit Blickrichtung quer zur Längsrichtung des Hauptförderers von Fig. 1, und
- Figur 25: eine Draufsicht auf den Lagerbock von Figur 24.

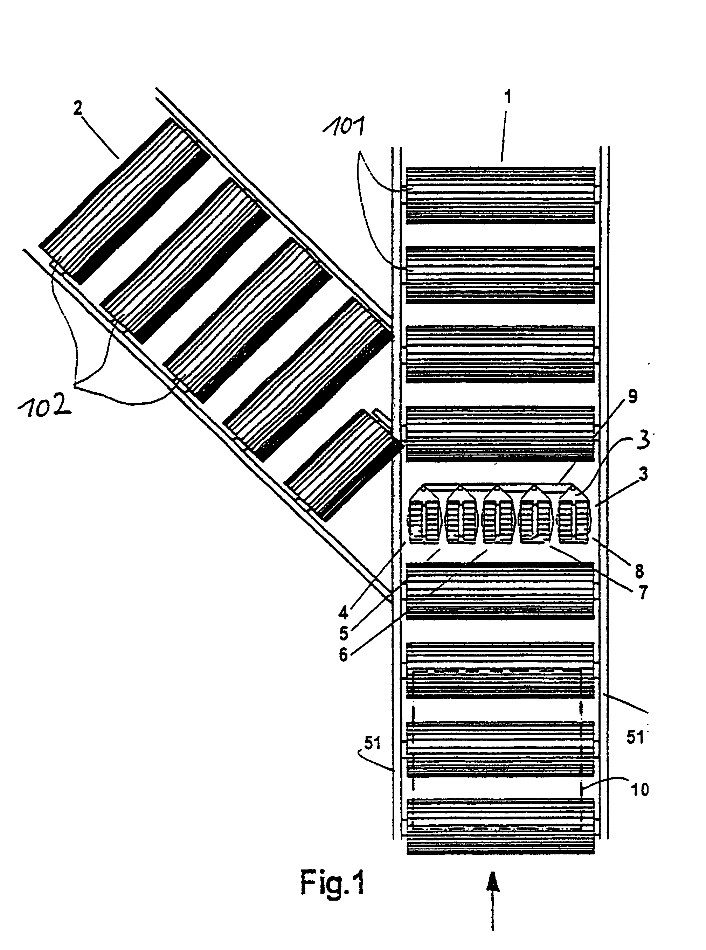

Figur 1 zeigt eine schematische Draufsicht auf einen Hauptförderer 1, der eine Vielzahl von Hauptforderer-Rollen oder -Walzen 101 aufweist, und auf einen Nebenförderer 2, der eine Vielzahl von Nebenförderer-Rollen oder - Walzen 102 aufweist. Fig. 1 zeigt ferner eine in Geradeaus-Stellung befindliche bevorzugte Ausführungsform einer erfindungsgemäßen Weiche 3. Von dem Hauptförderer 1 zweigt im Bereich der erfindungsgemäßen Weiche 3 der Nebenförderer 2 ab. Der Nebenförderer 2 kann mit Hilfe der Weiche 3 mit Fördergut 10 (in Fig. 1 gestrichelt dargestellt), welches über den Hauptförderer in der Richtung des Pfeiles von Fig. 1 in den Bereich der Weiche 3 gelangt, beschickt werden. Die erfindungsgemäße Weiche 3 kann bedarfsweise zwischen einer Geradeaus-Stellung und einer Umlenkstellung umgestellt werden. Fördergut 10 wird auf den Nebenförderer ausgeschleust, wenn sich die Weiche 3 in Umlenkstellung befindet.

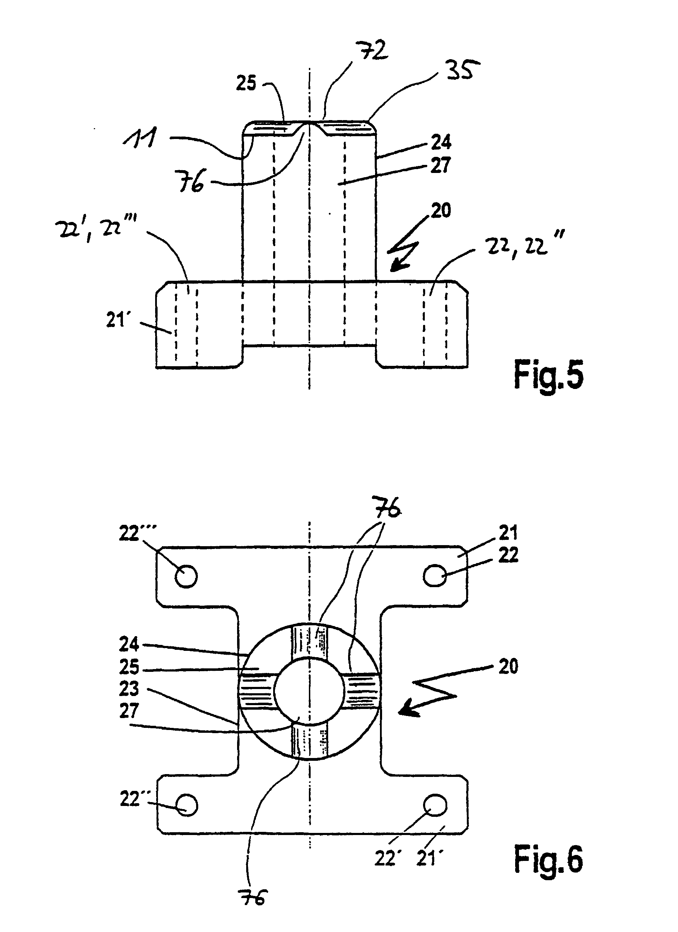

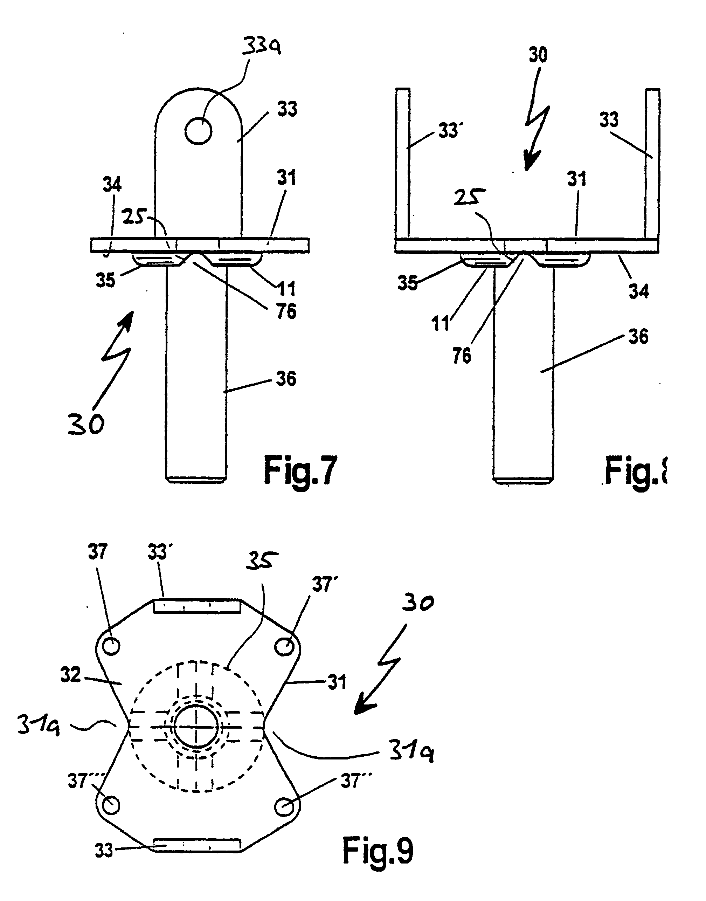

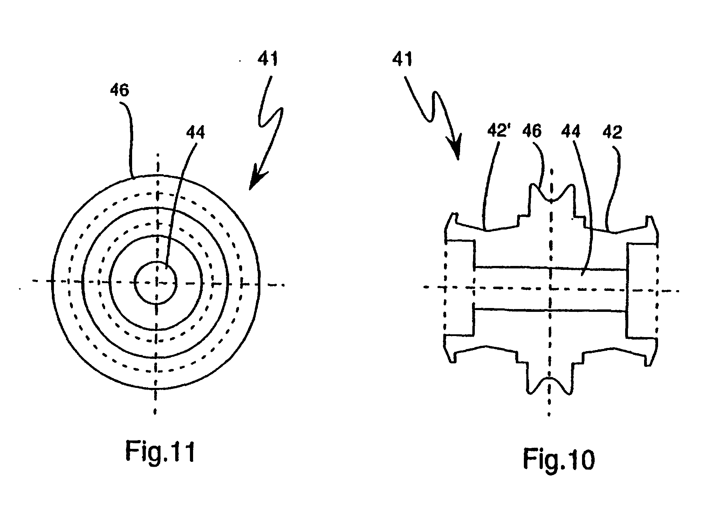

Die in Fig. 1 gezeigte Ausführungsform einer erfindungsgemäßen Weiche 3 umfaßt eine Gruppe von fünf parallel nebeneinander angeordneten Modulen 4, 5, 6, 7, 8, von denen jedes einen Lagerbock 20 (Fig. 5-6, Fig. 24-25), eine Gabel 30 (Fig. 7-9, Fig. 21-23) und einen mit Hilfe der Gabel 30 rotierbar gelagerten Rollenkörper 40 (Fig. 10-13) umfaßt. Der Aufbau und die Funktionsweise der Module 4, 5, 6, 7, 8 werden im nachfolgenden anhand verschiedener Ausführungsformen näher erläutert.

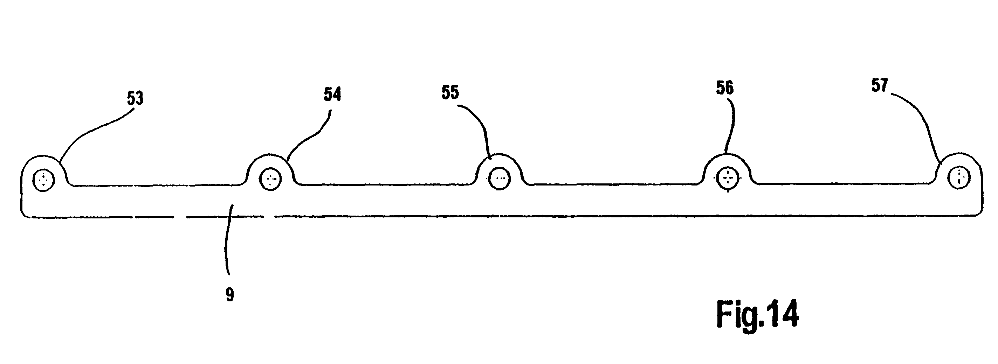

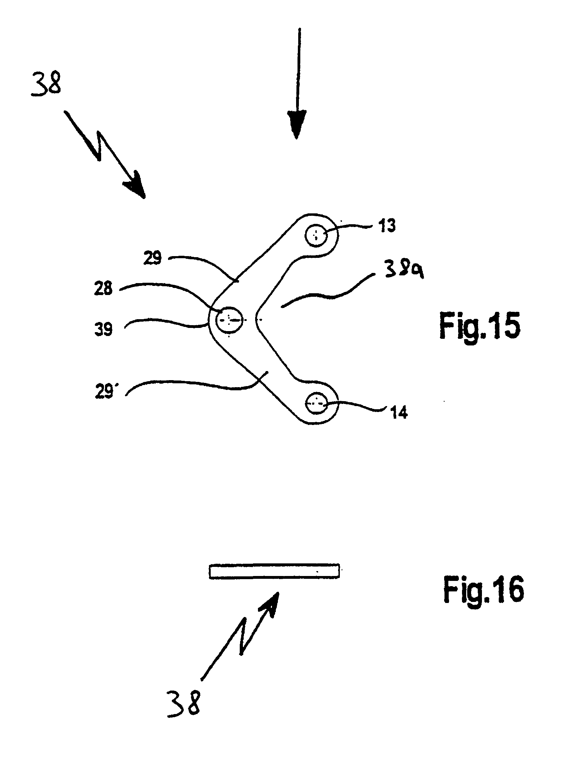

Die Umstellung der Weiche 3 zwischen der in Fig. 1 gezeigten Geradeaus-Stellung und der Umlenkstellung erfolgt gemäß einer bevorzugten Ausführungsform der Erfindung mit Hilfe von Hebeln 38 (detaillierter erläutert unter Bezugnahme auf Fig. 15-16) und einer Koppelstange 9 (detaillierter erläutert unter Bezugnahme auf Fig. 14). Der Hauptförderer 1 ist seitlich durch Wangen 51, 51' eingefaßt, die das Fördergut 10 vor seitlichem Herabfallen schützen.

Bestehende Förderanlagen können mit relativ geringem Aufwand mit einer erfindungsgemäßen Weiche 3 nachgerüstet werden. Die Wangen 51, 51' brauchen für eine solche Nachrüstung vorteilhafterweise nicht unterbrochen oder aufgetrennt zu werden.

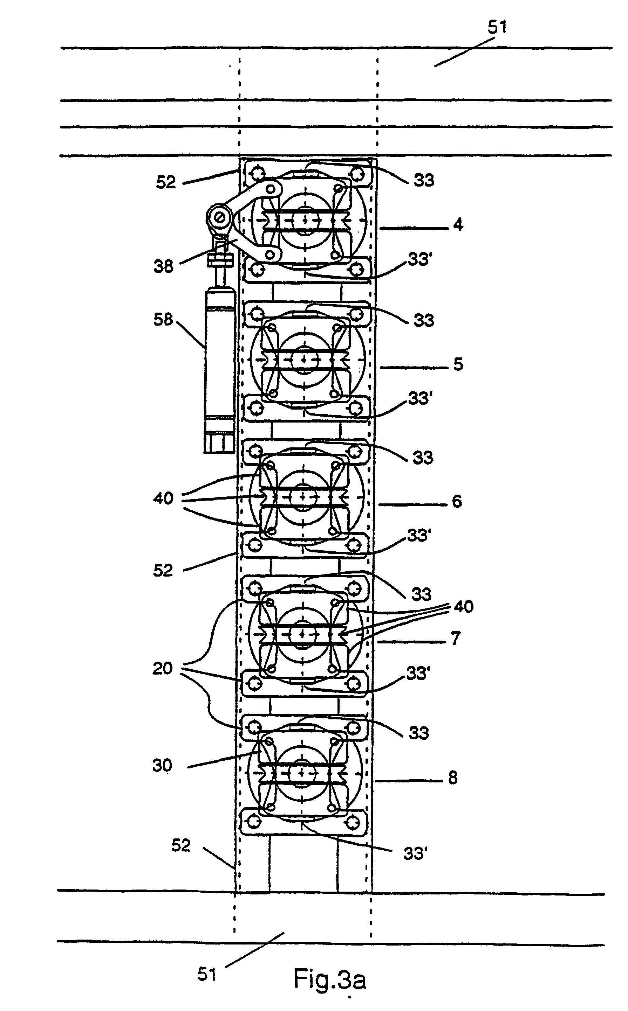

Fig. 3a zeigt eine gegenüber Fig. 1 vergrößerte und detailliertere Darstellung der Weiche 3, wobei die Koppelstange 9, der Nebenförderer 2 und die Rollen oder Walzen 101 des Hauptförderers 1 aus Gründen der Übersichtlichkeit weggelassen sind. Die unter Bezugnahme auf Fig. 10-13 näher erläuterten Rollenkörper 40 sind in Fig. 3a durchsichtig gezeichnet. Jede Gabel 30 (Fig. 7-9) weist zwei Lagerarme 33, 33' (Fig. 3a) auf, zwischen denen jeweils ein Rollenkörper 40 rotierbar gelagert ist. Die Module 4, 5, 6, 7, 8 werden von einer quer zur Längsrichtung des Hauptförderers verlaufenden Tragkonsole 52 getragen.

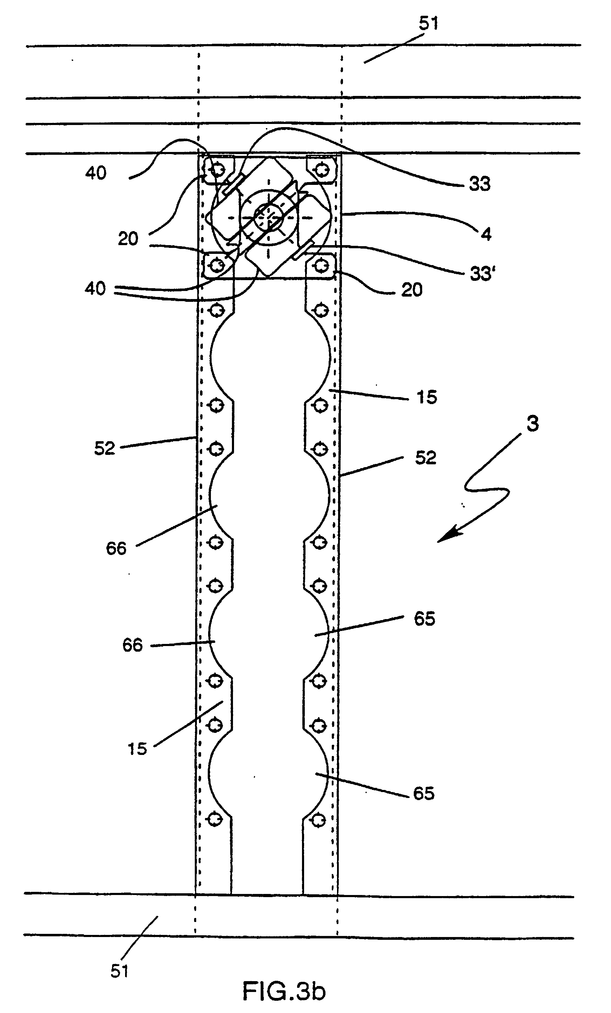

Wie bereits unter Bezugnahme auf Fig. 1 erwähnt wurde, ist in einer bevorzugten Ausführungsform der Erfindung an jeder Gabel 30 ein Hebel 38 angeordnet, wobei in Fig. 3 aus Gründen der Übersichtlichkeit nur der an dem Modul 4 angeordnete Hebel 38 gezeigt ist und die übrigen Hebel weggelassen sind. Alle Hebel 38 sind gelenkig mit der Koppelstange 9 (in Fig. 3a nicht gezeigt) verbunden, so daß die bei der Umstellung der Weiche 3 aus der Geradeaus-Stellung in die Umlenkstellung und umgekehrt erfolgenden Schwenkbewegungen der Gabeln 30 mechanisch gekoppelt sind.

Fig. 3a zeigt gemäß einer bevorzugten Ausführungsform der Erfindung ferner einen als Stellantrieb für die Weiche 3 dienenden Pneumatikzylinder 58, mit dessen Hilfe die Koppelstange 9 (in Fig. 3a nicht gezeigt) zur Umstellung der Weiche 3 aus der Geradeaus-Stellung in die Umlenkstellung und umgekehrt jeweils in Längsrichtung der Koppelstange 9 bewegt werden kann.

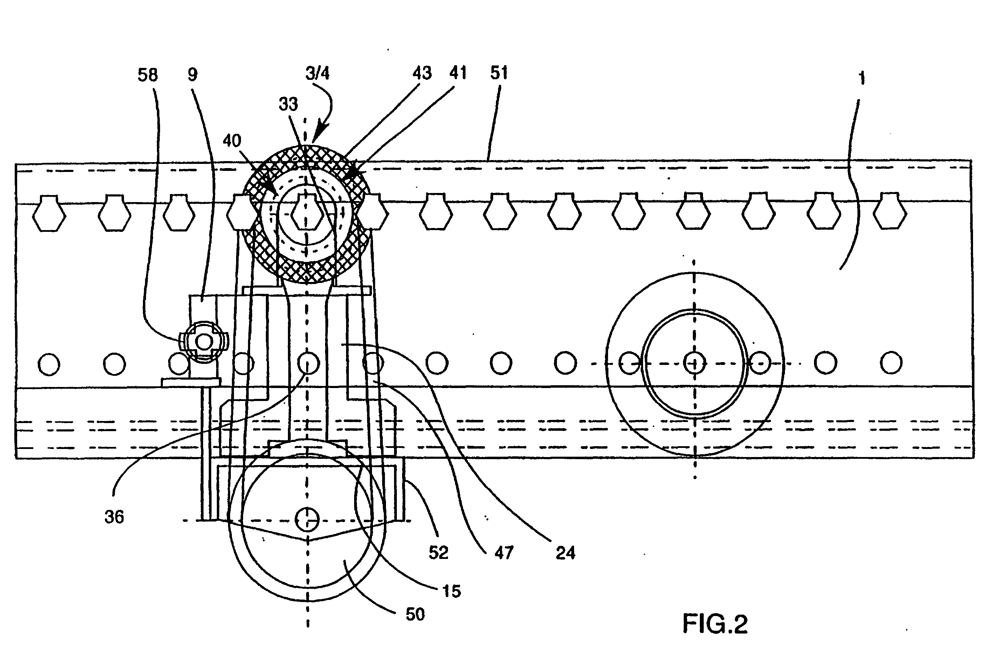

Fig. 3b zeigt die Weiche 3 von Fig. 3a, wobei nur ein Modul 4 gezeigt ist, dessen Gabel 30 sich in Umlenkstellung befindet, während die anderen Module 5, 6, 7, 8 sowie die Hebel 38 und der Pneumatikzylinder 58 aus Gründen der Übersichtlichkeit weggelassen sind. Aufgrund der Umlenkstellung der Gabel 30 sind die Position der Lagerarme 33, 33' sowie die Orientierung des Rollenkörpers 40 gegenüber Fig. 3a verändert. Die Tragkonsole 52 weist an ihrer Oberseite einen durchbrochenen Steg 15 auf, der im Bereich jedes Moduls 4, 5, 6, 7, 8 (Fig. 1, Fig. 3a) ein Paar von einander in Längsrichtung des Hauptförderers 1 (Fig. 1) gegenüberliegende kreisabschnittsförmige Aussparungen 65, 66 besitzt, deren Funktion unter Bezug auf Fig. 2 erläutert wird.

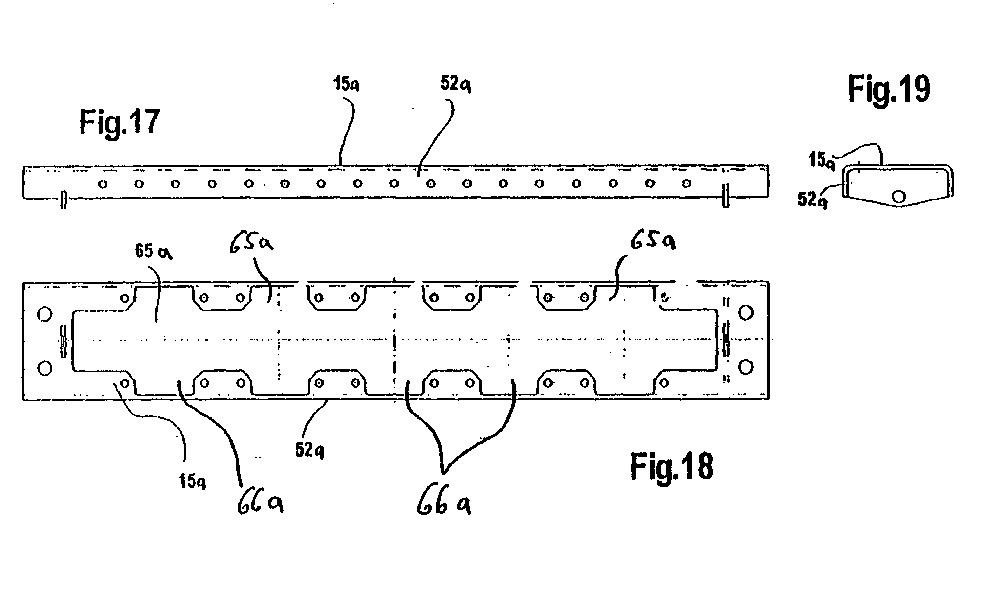

Nun wird auf die Fig. 17-19 Bezug genommen. Fig. 17 zeigt eine Seitenansicht, Fig. 18 eine Draufsicht und Fig. 19 eine Stirnansicht einer anderen Ausführungsform 52a einer Tragkonsole, in der die Aussparungen 65a, 66a im wesentlichen geradlinig begrenzt sind. Die Querschnittsform der Tragkonsole 52a ist im wesentlichen U-förmig (Fig. 19), wobei der horizontale Teil durch einen durchbrochenen Steg 15a gebildet ist.

Nun wird auf die Fig. 15-16 Bezug genommen, in denen der Hebel 38 in Draufsicht (Fig. 15) und in einer Seitenansicht (Fig. 16) aus der in Fig. 15 durch einen Pfeil gekennzeichneten Richtung detaillierter dargestellt ist. Der Hebel 38 ist im wesentlichen von der Form eines gleichschenkligen Dreiecks, dessen Fläche im Bereich der dem Scheitelbereich 39 des Dreiecks gegenüber liegenden Dreiecksseite eine Aussparung 38a aufweist, so daß die verbleibende Fläche durch zwei auseinandergespreizte Arme 29, 29' gebildet wird, die im Scheitelbereich 39 des Dreieckes zusammentreffen. Der Hebel 38 besitzt im Bereich der Enden seiner Arme 29, 29' je eine Bohrung 13, 14 und im Scheitelbereich 39 eine Gelenkbohrung 28.

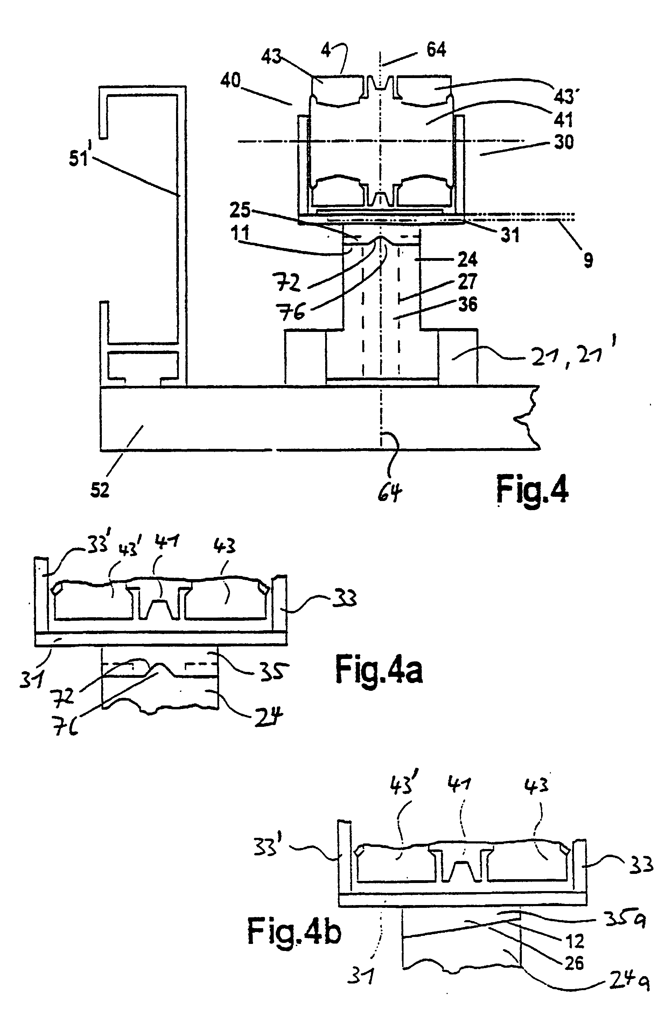

Nun wird auf die Fig. 4-9 Bezug genommen. Figur 4 zeigt eine Seitenansicht einer bevorzugten Ausführungsform eines Moduls 4, 5, 6, 7, 8. Wie bereits erwähnt, umfaßt eine bevorzugte Ausführungsform eines Moduls 4, 5, 6, 7, 8
- einen Lagerbock 20 (Fig. 5-6) mit einer vertikal angeordneten Lagerbuchse 24,
- eine in der Lagerbuchse 24 mit Hilfe eines Lagerbolzens 36 um eine vertikale Achse 64 drehbar gelagerte Gabel 30 (Fig. 7-9) mit zwei Lagerarmen 33,33',
- sowie einen zwischen den Lagerarmen 33, 33' um seine horizontale Achse drehbar gelagerten Rollenkörper 40 (Fig. 10-13).

Der Rollenkörper 40 umfaßt in einer bevorzugten Ausführungsform eine Felge 41 sowie zwei die Felge 41 reifenartig umgebende Radreifen 43, 43', die in Fig. 4 aus Gründen der besseren Verständlichkeit im Querschnitt dargestellt sind.

Die Fig. 5 und 6 zeigen eine bevorzugte Ausführungsform des Lagerbocks 20 detaillierter. Der Lagerbock 20 besitzt einen in Draufsicht (Fig. 6) gesehen H-förmigen Befestigungssockel 21, 21', der mit vertikalen Schraubenlöchern 22,22',22'',22''' durchsetzt ist. Auf einem Quersteg 23 trägt der Befestigungssockel 21,21' die vertikal ausgerichtete Lagerbuchse 24, die im wesentlichen die Form eines Hohlzylinders aufweist und zur drehbaren Aufnahme des Lagerbolzens 36 der Gabel 30 um die vertikale Achse 64 des Lagerbolzens dient (Fig. 4). Die Wandung der Lagerbuchse 24 weist an ihrer oberen Stirnseite 25 vorzugsweise vier in Bezug auf die Achse der Lagerbuchse 24 um vorzugsweise jeweils 90° zueinander versetzt angeordnete radial verlaufende, längliche Auswölbungen 76 auf (Fig. 5, Fig. 6) auf, die z.B. die Form von am Rücken abgerundeten Prismen besitzen können. Die Funktion der Auswölbungen 76 wird nachfolgend noch erläutert. Auf der oberen Stirnseite 25 der Wandung der Lagerbuchse 24 liegt eine Kopfplatte 35 auf, die an der Gabel 30 befestigt ist und deren Funktion nachfolgend ebenfalls noch erläutert wird.

Die Fig. 7-9 zeigen eine bevorzugte Ausführungsform der Gabel 30 detaillierter. Fig. 8 zeigt eine Seitenansicht und Fig. 9 eine gegenüber Fig. 8 um 90° gedrehte weitere Seitenansicht der Gabel 30, während Fig. 9 eine Draufsicht auf die Gabel 30 zeigt. Die Gabel 30 umfaßt eine horizontale Drehplatte 31, zwei einander gegenüberliegend an der Drehplatte 31 angeordnete Lagerarme 33, 33', den unter der Drehplatte mittig und vertikal angeordneten zylindrischen Lagerbolzen 36 und die Kopfplatte 35.

Die Drehplatte 31 ist von schmetterlingsähnlicher Form (Fig. 9). Die Form der Drehplatte 31 kann im wesentlichen auch beschrieben werden kann als ein Rechteck, dessen Ecken abgeschrägt sind und dessen Langseiten symmetrische, im wesentlichen dreieckige Aussparungen 31a aufweisen, deren Funktion nachfolgend noch erläutert wird. Die Lagerarme 33, 33' sind an den Schmalseiten des erwähnten, an seinen Langseiten ausgesparten Rechteckes senkrecht nach oben von der Drehplatte 31 aufragend und zueinander parallel angeordnet. Die Lagerarme 33, 33' weisen jeweils in gleicher Höhe eine Bohrung 33a auf. Die Achsen der Bohrungen 33a der beiden Lagerarme 33, 33' fluchten miteinander und dienen zur Aufnahme der Lagerwelle des bereits in Fig. 4 gezeigten und im nachfolgenden noch näher erläuterten Rollenkörpers 40.

Die Orientierung der Gabel 30 bei Geradeaus-Stellung bzw. bei Umlenk-Stellung der Weiche 3 geht aus der Position der Lagerarme 33, 33' in Fig. 3a und Fig. 3b hervor.

Die Drehplatte 31 besitzt vier an den Eckpunkten eines Quadrates angeordnete Bohrungen 37, 37', 37", 37''', die zur Befestigung des Hebels 38 (Fig. 15-16) dienen. Der Abstand der Bohrungen 37, 37', 37", 37''' entspricht dem Abstand zwischen den Bohrungen 13,14 in den Armen 29, 29' des Hebels 38. Der in Fig. 7-9 nicht gezeigte Hebel 38 ist so an der Drehplatte 31 angeordnet, daß der Scheitelbereich 39 des Hebels 38 von der Drehplatte 31 abgewandt ist und daß die beiden Bohrungen 13, 14 in den Armen 29, 29' des Hebels 38 sich mit zwei einander benachbarten Bohrungen 37, 37' oder 37', 37" oder 37", 37"' oder 37"', 37' der Drehplatte 31 decken. Mit Hilfe der Bohrungen 13, 14 des Hebels und der Bohrungen 37, 37', 37", 37"' der Drehplatte 31 sind der Hebel 38 und die Drehplatte 31 aneinander befestigt.

Die quadratische Anordnung der Bohrungen 37, 37', 37", 37''' in der Drehplatte 31 ist bewußt gewählt, um entsprechend verschiedener Ausführungsformen eines Stellantriebes für die Gabeln 30 der Weiche 3 (Fig. 1) zwischen vier möglichen Anordnungen für des Hebels 38 an der Drehplatte 31 wählen zu können. In einer bevorzugten Ausführungsform ist jede Gabel 30 über einen eigenen Hebel 38 mit der Koppelstange 9 verbunden wie in Fig. 1 gezeigt. In dieser Ausführungsform erfolgt die Stellbewegung der Koppelstange 9 zur Umstellung der Weiche 3 quer zur Längsrichtung des Hauptförderers 1 (Fig. 1). In einer anderen Ausführungsform, die z.B. bei Platzmangel in der Querrichtung des Hauptförderers vorteilhaft sein kann, sind die Hebel 38 so an den Drehplatten 31 angeordnet, daß die Stellbewegung zur Umstellung der Weiche 3 in Längsrichtung des Hauptförderers 1 erfolgt.

In einer weiteren Ausführungsform wird die Umstellung der Weiche 3 über zwei getrennte Hebel 38 je Gabel 30 ausgeführt und zwei Koppelstangen 9, wobei der zweite Hebel 38 jeweils auf der dem ersten Hebel 38 gegenüberliegenden Seite der Drehplatte 31 angeordnet ist. In diesem Fall kann z.B, die Umstellung der Weiche 3 in Umlenkrichtung über einen ersten Antrieb und die erste Koppelstange und die Rückstellung in Geradeaus-Stellung über einen zweiten Antrieb und die zweite Koppelstange erfolgen.

Eine bevorzugte Ausführungsform der Koppelstange 9 ist in Fig. 14 dargestellt. Die Koppelstange 9 weist in dieser Ausführungsform Gelenklaschen 53, 54, 55, 56, 57 auf, über die zusammen mit jeweils einer Gelenkbohrung 28 eines Hebels 38 eine gelenkige Verbindung mit einer Drehplatte 31 hergestellt ist. Über seine Gelenkbohrung 28 ist der Hebel 38 mit der Koppelstange 9 verbunden.

Der Lagerbolzen 36 (Fig. 7, Fig. 8) dient zur drehbaren Lagerung der Gabel 30 in der Lagerbuchse 24 des.Lagerbocks 20 (Fig. 4-6). Die bereits unter Bezug auf Fig. 5 erwähnte Kopfplatte 35 weist in einer bevorzugten Ausführungsform eine Ringform auf und ist konzentrisch zum Lagerbolzen 36 an der Unterseite 34 der Drehplatte 31 befestigt. Die Unterseite 11 der .Kopfplatte 35 weist in einer bevorzugten Auaführungsform vorzugsweise vier in Bezug auf die Achse des Lagerbolzens. 36 um jeweils vorzugsweise 90° zueinander versetzt angeordnete radial verlaufende rinnenförmige Vertiefungen 72 auf (Fig. 7, Fig. 8), die räumlich mit den Auswölbungen 76 der oberen Stirnfläche 25 der Wandung der Lagerbuchse 24 korrespondieren.

Die Orientierung der Kopfplatte 35 gegenüber der Gabel 30 ist so gewählt, daß die Projektion jeder Vertiefung 72 der Unterseite 11 der Kopfplatte 35 mit der Projektion je einer der Auswölbungen 76 der oberen Stirnseite 25 der Wandung der Lagerbuchse 24 deckungsgleich zusammenfällt (Fig. 5, Fig. 6), wenn sich die Gabel 30 in Geradeaus-Stellung befindet wie in Fig. 1 und Fig. 3a dargestellt. In diesem Fall greift jede Auswölbung 76 in eine Vertiefung 72 ein, wobei die Kopfplatte 35 mit ihrer Unterseite flächig auf der oberen Stirnseite 25 der Wandung der Lagerbuchse 24 aufliegt. Diese Situation ist in Fig. 4a verdeutlicht, die eine gegenüber Fig. 4 vergrößerte Darstellung der Kopfplatte 35, des oberen Teils der Lagerbuchse 24 sowie der unteren Teile der Gabel 30 und des Rollenkörpers 40 und ferner eine in die Vertiefung 72 eingreifende Auswölbung 76 zeigt.

Befindet sich die Gabel 30 jedoch in Umlenkstellung (Fig. 3b), so fallen die Projektionen der Vertiefungen 72 und der Auswölbungen 76 nicht zusammen. In diesem Fall greifen die Auswölbungen 76 nicht in die Vertiefungen 72 ein. Die Kopfplatte 35 liegt daher mit ihrer Unterseite nicht flächig auf der oberen Stirnseite 25 der Wandung der Lagerbuchse 24 auf, sondern die Unterseite der Kopfplatte 35 reitet auf den Rücken oder Gipfel der Auswölbungen 76, so daß die gesamte Gabel 30 und damit auch der von ihr getragene Rollenkörper 40 erfindungsgemäß in Umlenkstellung um die Höhe der Auswölbungen 76 gegenüber der Geradeausstellung angehoben sind.

Die Auswölbungen 76 und Vertiefungen 72 bilden demnach erfindungsgemäß einen Hubmechanismus, der durch Umschwenken der Gabel 30 gegenüber dem Lagerbock 20 aus der Geradeaus-Stellung in die Umlenkstellung zwangsläufig wirksam wird. .

Die in den Fig. 4, 4a und in den Fig. 5-9 gezeigte Ausführungsform eines Hubmechanismus wirkt dergestalt, daß sich die Gabel 30 bei einer Vedrehung von 0°, 90°, 180° und 270° gegenüber der Geradeaus-Stellung nicht in angehobenem Zustand, bei allen dazuwischenliegenden Winkeln jedoch in einem angehobenem Zustand befindet. Der Hub erfolgt dabei sowohl durch eine Links- als auch eine Rechtsdrehung der Kopfplatte 35 aus der Geradeaus-Stellung der Gabel 30 heraus.

In einer anderen Ausfühuungsform eines Hubmechanismus (nicht gezeigt) sind die Vertiefungen 72 in der Kopfplatte 35 und die Auswölbungen 76 auf der oberen Stirnfläche 25 der Lagerbuchse 24 ausgebildet. Das Wirkungsprinzip ist zu dem unter Bezug auf die Fig. 4, 4a und die Fig. 5-9 erläuterten Hubmechanismus-Wirkungsprinzip analog.

Fig. 4b zeigt eine weitere Ausführungsform eines Hubmechanismus, bei dem eine Kopfplatte 35a und eine Lagerbuchse 24a zusammenwirken. Die Kopfplatte 35a weist in dieser Ausführungsform die Form eines vertikalen, an der Unterseite schräg abgeschnittenen Hohlzylinders auf, während die Lagerbuchse 24a die Form eines vertikalen, an der Oberseite schräg abgeschnittenen Hohlzylinders aufweist. Die einander zugekehrten schrägen Stirnseiten der Wandungen der Kopfplatte 35a bzw. die Lagerbuchse 24a weisen somit in dieser Ausführungsform jeweils schräge Auflaufbahnen 26, 12 auf. Die Anordnung des in Fig. 4b nicht gezeigten Lagerbolzens 36 ist gegenüber Fig. 4, Fig. 6 und Fig. 7 nicht verändert. In der in Fig. 4b dargestellten Position liegen die Auflaufbahnen 26, 12 vollständig aneinander an, so daß sich die Gabel 30 nicht in angehobener Position befindet. Die gegenseitige Orientierung der Kopfplatte 35a bzw. die Lagerbuchse 24a ist hierbei so gewählt, daß die in Fig. 4 dargestellte, nicht angehobene Position der Geradaus-Stellung der Gabel 30 entspricht. Jede Verdrehung der Gabel 30 aus dieser Position heraus führt zu einem zwangsläufigen Anheben der Gabel 30 gegenüber der Lagerbuchse 24a, wobei der Hub bis zu einem Drehwinkel von 180° gegenüber der in Fig. 4b dargestellten Position anwächst und danach wieder geringer wird. Der Hub erfolgt dabei sowohl durch eine Links- als auch eine Rechtsdrehung der Kopfplatte 35a aus der Geradeaus-Stellung der Gabel 30 heraus.

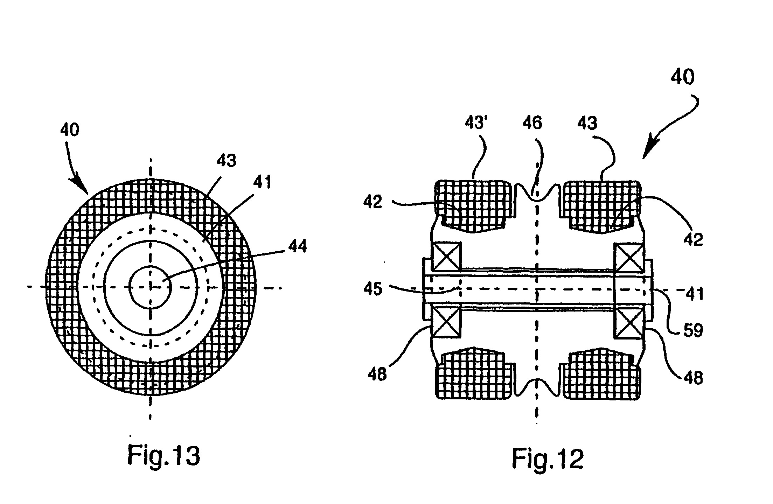

Zwischen den Lagerarmen 33, 33' der Gabel 30 ist der Rollenkörper 40, der in einer bevorzugten Ausführungsform eine Felge 41 sowie zwei die Felge 41 reifenartig umgebende Radreifen 43, 43' umfaßt, drehbar um seine horizontale Achse 59 aufgenommen (Fig. 4, Fig. 12). Im folgenden wird der Rollenkörper 40 unter Bezugnahme auf die Figuren 10-13 anhand einer bevorzugten Ausführungsform näher erläutert.

Figur 10 zeigt eine Querschnittsdarstellung und Fig. 11 eine Stirnansicht einer bevorzugten Ausführungsform einer Felge 41 eines Rollenkörpers 40 ohne Radreifen, wobei die Schnittebene parallel zur Felgenachse verläuft. Die Felge 41 weist eine Nabenbohrung 44 zur Aufnahme einer Lagerwelle 45 (Fig. 12) auf. Zur Aufnahme der Radreifen 43, 43' (Fig. 4) weist die Felge 41 ein doppeltes Felgenbett 42, 42' auf.

Zwischen den Felgenbetten 42, 42' ist eine Riemenscheibe 46 ausgebildet, um die zum Antrieb einer Rotation des Rollenkörpers 40 ein Treibriemen 47 gerührt sein kann. Bevorzugterweise ist die Riemenscheibe 46 gegenüber dem äußeren Umfang der Radreifen 43, 43' versenkt angeordnet, so daß der Rollenkörper 40 durch einen Endlos-Treibriemen 47 (Fig. 2) angetrieben werden kann, der vollständig, einschließlich seiner äußeren Umlauffläche, unterhalb der Förderebene liegt, also nicht mit dem Fördergut 10 (Fig. 1) in Berührung kommt. Hierbei können mehrere oder alle Rollenkörper 40 der Weiche 3 über je einen Treibriemen 47 durch eine gemeinsame, unterhalb der Förderebenen angeordnete Antriebswelle 9 (Fig. 2) angetrieben werden.

Figur 12 zeigt eine Querschnittsdarstellung und Fig. 13 eine Stirnansicht eines kompletten Rollenkörpers 40, umfassend die Felge 41 von Fig. 10, zwei Radreifen 43, 43' sowie eine Lagerwelle 45, die in der Nabenbohrung 44 mittels Kugellagern 48 gelagert ist und zur rotierbaren Lagerung des Rollenkörpers 40 zwischen den Lagerarmen 33,33' der Gabel 30, 130 dient.

Die Scheitel der Radreifen 43, 43' liegen bevorzugterweise in Geradeaus-Stellung der Weiche 3 (Fig. 1) in einer Ebene mit den Walzen 101 des Hauptförderers 1. Soll die Weiche 3 in die Umlenkstellung umgestellt werden, so wird gemäß einer Ausführungsform der Erfindung der Pneumatikzylinder 58 (Fig. 3a) aktiviert, der auf die Koppelstange 9 eine Stellbewegung ausübt. Dies bewirkt ein gruppenweises Schwenken der Gabeln 30, 130 in die Umlenkstellung, wobei erfindungsgemäß ein Hubmechanismus zur Wirkung kommt, wie oben unter Bezug auf Fig. 4a und Fig. 4b erläutert wurde.

Nun wird auf Fig. 2 Bezug genommen, die eine Stirnansicht des Moduls 4, 5, 6, 7, 8 von Fig. 4 mit einem angetriebenen Rollenkörper 40 in einem zur besseren Verständlichkeit durchsichtig gezeichneten Hauptförderer 1 aus einer Richtung quer zum Hauptförderer 1 zeigt. Auch der Rollenkörper 40, der Lagerarm 33 der Gabel 30 sowie der Lagerbock 20 sind in Fig. 2 durchsichtig gezeichnet. Unterhalb des von der Tragkonsole 52 getragenen Moduls 4, 5, 6, 7, 8 ist eine sich parallel zur Tragkonsole 52 erstreckende rotierende Antriebswelle 50 angeordnet, um die ein Treibriemen 47 geführt ist. Der Treibriemen 47 ist des weiteren um die gegenüber der Außenfläche des Radreifens 43 versenkt angeordnete Riemenscheibe 46 geführt und überträgt auf diese Weise die Rotationsbewegung der Antriebswelle 50 auf den Rollkörper 40. Der Treibriemen 47 ist durch den aufgrund der Aussparung 31a der Drehplatte 31 und der Aussparung 38a des Hebels 38 vorteilhafterweise zur Verfügung stehenden Zwischenraum zwischen der Drehplatte 31 und dem Hebel 38 einerseits und die Aussparung 65, 66, 67, 68, 69 des Steges 15 der Tragkonsole andererseits 52 geführt. Ein Vorteil, der hiermit erreicht wird, besteht darin, daß die Rollenkörper 40 über die gleichen Antriebseinheiten betrieben werden können wie die übrigen Rollen 101 des Hauptförderers, ohne daß sich die Bauhöhe oder Bautiefe der Weiche 3 hierdurch wesentlich vergrößern. Die Antriebswelle 58 kann über je einen Treibriemen 47 mehrere oder alle Rollkörper 40 der Weiche 3 zugleich antreiben. Die Stellbewegungen der Gabel 30 von der Geradeaus-Stellung in die Umlenkstellung und umgekehrt werden durch den als Stellantrieb fungierenden Pneumatikzylinder 58 angetrieben und über die Koppelstange 9 und den Hebel 38 auf die Gabel 30 übertragen.

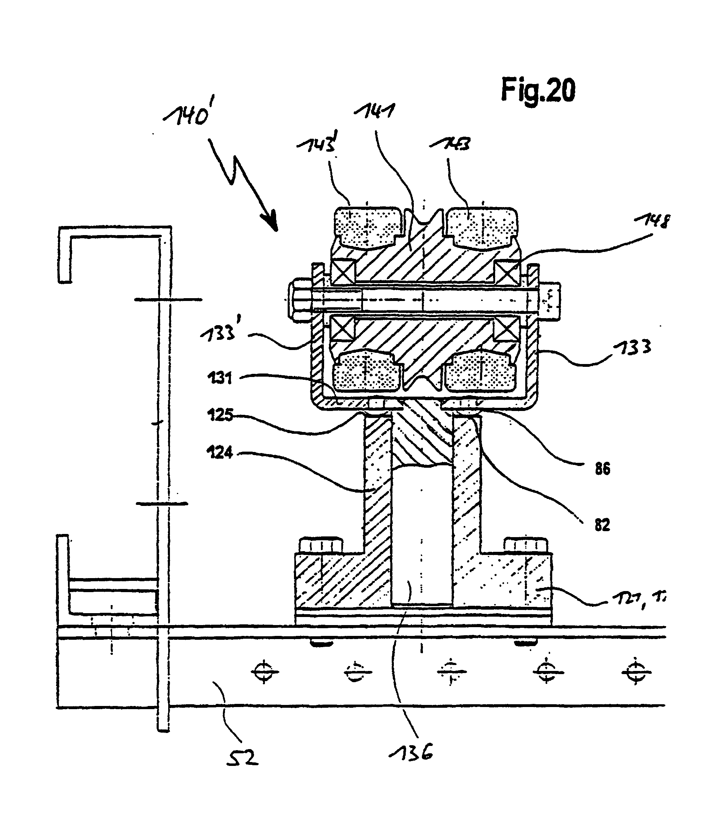

Nun wird zur Erläuterung einer weiteren Ausführungsform eines Hubmechanismus auf die Fig. 20-25 Bezug genommen.

Fig. 20 zeigt eine Querschnittsansicht einer weiteren Ausführungsform eines Moduls 104, 105, 106, 107, 108, bei dem eine weitere Ausführungsform eines Hubmechanismus zum Einsatz kommt. Ein Vorteil dieser Ausführungsform besteht darin, daß die aufwendige Herstellung einer Kopfplatte 35, 35a entfällt.

In Analogie zu der in Fig. 4 dargestellten Ausführungsform eines Moduls 4, 5, 6, 7, 8 weist die in Fig. 20 gezeigte Ausführungsform eines Moduls 104 einen Lagerbock 120 mit einer Lagerbuchse 124, eine Gabel 130 mit einer Drehplatte 131, zwei Lagerarmen 133, 133', einem Lagerbolzen 136 sowie einen Rollenkörper 140 mit Felge 141, zwei Radreifen 143, 143' und mit einer im Rollenkörper 140 durch Kugellager 148 gelagerten Lagerachse 145 auf. Im Gegensatz zu der in Fig. 4 dargestellten Ausführungsform eines Moduls 4, 5, 6, 7, 8 weist die in Fig. 20 gezeigte Ausführungsform eines Moduls 104 keine Kopfplatte auf. Die Lagerbuchse 124 weist rinnenförmige Vertiefungen 82 auf.

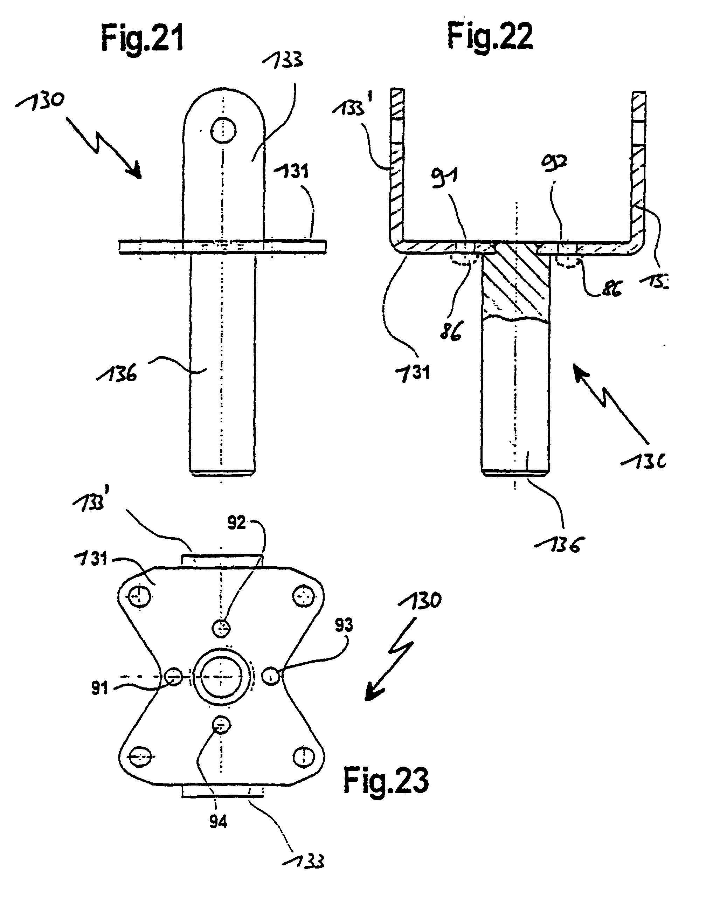

Die im Sinne des Hubmechanismus zugehörigen Auswölbungen 86 an der Unterseite der Drehplatte 131 sind bevorzugt durch die Köpfe von Nieten gebildet (Fig. 22).

Die Fig. 21-23 zeigen die Gabel 130 von Fig. 20 detaillierter. Fig. 21 zeigt eine Seitenansicht und Fig. 22 eine gegenüber Fig. 21 um 90° gedrehte weitere Seitenansicht der Gabel 130, während Fig. 23 eine Draufsicht auf die Gabel 130 zeigt. Die Drehplatte 131 weist vier an der Drehplatte 131 angeordnete, in Fig. 21 und Fig. 23 nicht gezeigte Auswölbungen 86 auf. In Fig. 22 sind die Auswölbungen 86 gestrichelt dargestellt. Die Drehplatte 131 ist mit vier die Ecken eines Quadrates bildenden Bohrungen 91, 92, 93, 94 versehen, die zur Aufnahme von Nieten dienen, deren Köpfe die Auswölbungen 86 bilden. In jede der Bohrungen 91, 92, 93, 94 ist eine Niete so eingepresst, daß deren Kopf nach unten über die Drehplatte 131 in Richtung des Lagerbocks 20 ausragt.

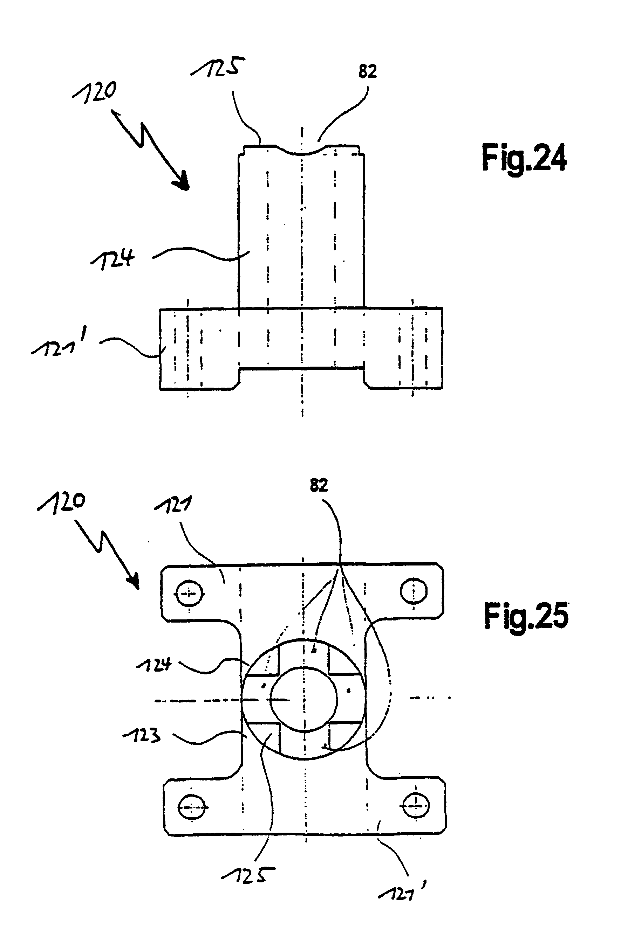

Die Fig. 24 und 25 zeigen den Lagerbock 120 detaillierter. Der Lagerbock 120 weist einen in Draufsicht (Fig. 6) gesehen H-förmigen Befestigungssockel 121,121' auf, der mit dem in Fig. 6 gezeigten Befestigungssockel 20 identisch ist, und eine vertikal ausgerichtete Lagerbuchse 124, die im wesentlichen die Form eines Hohlzylinders aufweist. Die Wandung der Lagerbuchse 124 weist an ihrer oberen Stirnseite 125 vier in Bezug auf die Achse der Lagerbuchse 124 um jeweils 90° zueinander versetzt angeordnete radial verlaufende rillenförmige Vertiefungen 82 auf.

Die Orientierung der Bohrungen 91, 92, 93, 94 (Fig. 23) gegenüber den Vertiefungen 82 ist so gewählt, daß jede der Nieten 86 im Bereich der Sohle einer der Vertiefungen 82 auf der Lagerbuchse 124 aufliegt, wenn sich die Gabel 130 in Geradeaus-Stellung befindet In diesem Fall greift jede Niete 86 so in eine Vertiefung 82 ein, daß sich die Gabel 130 in der tiefstmöglichen Position befindet.

Befindet sich die Gabel 130 jedoch in Umlenkstellung, dann greifen die Nieten 86 nicht in die Vertiefungen 82 ein, so daß in Umlenkstellung die gesamte Gabel 130 erfindungsgemäß gegenüber ihrer Position in Geradeaus-Stellung angehoben ist. Die Auswölbungen 86 und die Vertiefungen 82 bilden demnach erfindungsgemäß einen Hubmechanismus, der durch Schwenken der Gabel 130 gegenüber dem Lagerbock 120 aus der Geradeaus-Stellung in die Umlenkstellung zwangsläufig wirksam wird.

In einer Ausführungsform (nicht gezeigt) werden anstelle der Nieten von Muttern gehaltene Gewindeschrauben mit Rundkopf verwendet, wobei die Rundköpfe der Schrauben nach unten aus der Drehplatte 131 ausragen und als Auswölbungen 86 dienen. Ein Vorteil dieser Ausführungsform besteht darin, daß die Schrauben bei Abnützung ihrer Köpfe mit geringem Aufwand ausgetauscht werden können. Ein weiterer Vorteil dieser Ausführungsform besteht darin, daß die Schrauben mit geringem Aufwand gegen solche mit kleinerem oder flacherem Kopf ausgetauscht werden können, wenn ein geringerer Hub erwünscht ist.

### Bezugszeichenliste:

- 1: Hauptförderer
- 2: Nebenförderer
- 3: Weiche
- 4,, 5, 6, 7, 8,104: Modul
- 9: Koppelstange
- 10: Fördergut
- 11: Unterseite von 35
- 12: Unterseite von 35a
- 13, 14: Bohrungen in 38
- 15, 15a: Steg von 52, 52a
- 20: Lagerbock
- 21, 21', 121, 121': Befestigungssockel
- 22, 22', 22", 22"': Schraubenlöcher von 20
- 23, 123: Quersteg von 20, 120
- 24, 24a: Lagerbuchse von 20
- 124: Lagerbuchse von 120
- 25, 125: obere Stirnfläche der Wandung von 24, 124
- 26: obere Stirnfläche der Wandung von 24a
- 27: Lagerbohrung von 24
- 28: Gelenkbohrung von 38
- 29, 29': Arme von 38
- 30, 130: Gabel
- 31, 131: Drehplatte von 30, 130
- 31a: Aussparungen von 31
- 32: Oberseite von 31
- 33, 33', 133, 133': Lagerarme auf 31, 131
- 33a: Bohrung in 33, 33'
- 34: Unterseite von 31
- 35, 35a: Kopfplatte
- 36: Lagerbolzen
- 37, 37', 37", 37''': Bohrungen in 31
- 38: Hebel
- 38a: Aussparung in 38
- 39: Scheitelbereich von 38
- 40, 140: Rollenkörper
- 41, 141: Felge von 40, 140
- 42, 42': Felgenbett von 41
- 43, 43', 143, 143': Radreifen von 40, 140
- 44: Nabenbohrung von 41
- 45: Lagerwelle
- 46: Riemenscheibe
- 47: Treibriemen
- 48: Kugellager
- 50: Antriebswelle
- 51: Wangen von 1
- 52, 52a: Tragkonsole
- 53, 54, 55, 56, 57: Gelenklaschen von 9
- 58: Pneumatikzylinder
- 59: Drehachse von 40
- 63: Kanal zwischen 38 und 31
- 64: vertikale Achse von 36
- 65, 66: Aussparungen in 15
- 65a, 66a: Aussparungen in 15a
- 72: Rinnen in 11
- 76: Auswölbungen auf 25
- 82: Rinnen in 125
- 86: Auswölbungen auf 131
- 91, 92, 93, 94: Bohrungen 131
- 101: Hauptförderer-Rollen oder -Walzen
- 102: Nebenförderer-Rollen oder -Walzen

## Patentansprüche

1. Weiche für ein Fördersystem, insbesondere für einen Rollenförderer, die zwischen einer Geradeaus-Stellung und einer Umlenkstellung zum Umlenken von Fördergut von einem Hauptförderer auf einen vom Hauptförderer abzweigenden Nebenförderer umstellbar ist, umfassend eine Gruppe von Rollenkörpern mit horizontal verlaufenden Rotationsachsen, wobei die Rollenkörper (40, 140) an je einer Gabel (30, 130) um ihre Rotationsachsen rotierbar angeordnet sind und jede Gabel (30, 130) einen von der Gabel (30, 130) vertikal nach unten abstehend angeordneten Lagerbolzen (36) aufweist, welcher von oben her in eine vertikal angeordnete, oben offene Lagerbuchse (24, 24a, 124) eines an der Schwenkbewegung nicht teilnehmenden Lagerbocks (20, 120) eingeführt ist, so daß die Gabel (30, 130) zwischen einer ersten und einer zweiten Stellung um eine vertikale Schwenkachse schwenkbar in dem Lagerbock (20, 120) gelagert ist, wobei sich die Weiche (3) in der Geradeaus-Stellung befindet, wenn sich die Gabeln (30, 130) jeweils in der ersten Stellung befinden, und sich die Weiche (3) in der Umlenkstellung befindet, wenn sich die Gabeln (30, 130) jeweils in der zweiten Stellung befinden, wobei die Gabeln (30, 130) während der Umschwenkens von der ersten in die zweite Stellung durch einen Hubmechanismus so angehoben werden, daß das Fördergut (10) beim Passieren der Weiche (3) durch mindestens einen der Rollenkörper (40, 140) zumindest teilweise gegenüber dem Fördersystem angehoben wird, **dadurch gekennzeichnet, daß**
- entweder die Gabel (30) eine im oberen Endbereich des Lagerbolzens (36) angeordnete, an ihrer Unterseite (11) Vertiefungen (72) aufweisende Kopfplatte (35) aufweist und die Wandung der Lagerbuchse (24) oben durch eine Auswölbungen (76) aufweisende obere Stirnfläche (25) begrenzt ist, wobei der Lagerbolzen (36) zur um eine vertikale Achse schwenkbaren Lagerung der Gabel (30) von oben her in die Lagerbuchse (24) eingeführt ist und die Unterseite (11) nur in der ersten Stellung auf der oberen Stirnfläche (25) aufliegt, wobei die Auswölbungen (76) und die Vertiefungen (72) so angeordnet sind, daß Auswölbungen (76) in der ersten Stellung der Gabel (30) in die Vertiefungen (72) eingreifen und in der zweiten Stellung der Gabel (30) nicht in die Vertiefungen (72) eingreifen, so daß sich die Gabel (30) in der zweiten Stellung in einer gegenüber ihrer Position in der ersten Stellung um die Tiefe der Vertiefungen (72) oder Höhe der Auswölbungen (76) angehobenen Position befindet,
- oder die Gabel (30) eine im oberen Endbereich des Lagerbolzens (36) angeordnete Kopfplatte (35a) aufweist, deren Unterseite (12) plan und gegenüber der Horizontalen geneigt ist, und die Wandung der Lagerbuchse (24a) oben durch eine plane, gegenüber der Horizontalen geneigte obere Stirnfläche (26) begrenzt ist, wobei der Lagerbolzen (36) zur um eine vertikale Achse schwenkbaren Lagerung der Gabel (30) von oben her in die Lagerbuchse (24) eingeführt ist und die Unterseite (12) nur in der ersten Stellung auf der oberen Stirnfläche (26) aufliegt, wobei die räumliche Lage der Unterseite (12) und der oberen Stirnfläche (26) so zueinander orientiert sind, daß sich die Gabel (30) in der zweiten Stellung in einer gegenüber ihrer Position in der ersten Stellung angehobenen Position befindet,
- oder der Lagerbock (120) Vertiefungen (82) und die Gabel (130) eine Drehplatte (131) mit Auswölbungen (86) aufweist, wobei die Drehplatte (131) nur in der ersten Stellung auf der oberen Stirnfläche der Lagerbuchse (124) aufliegt und die Auswölbungen (86) in der ersten Stellung der Gabel ( 130) in die Vertiefungen (82) eingreifen und in der zweiten Stellung der Gabel (130) außerhalb der Vertiefungen (82) auf dem Lagerbock (120) aufliegen, so daß sich die Gabel (130) in der zweiten Stellung in einer gegenüber ihrer Position in der ersten Stellung um die Tiefe der Vertiefungen (82) oder Höhe der Auswölbungen (86) angehobenen Position befindet.

2. Weiche nach Anspruch 1, dadurch gekerimzeichnet,
daß die Auswölbungen (72, 86) durch die Köpfe von Nieten oder Schrauben gebildet sind.

3. Weiche nach mindestens einem der vorstehenden Ansprüche,
**dadurch gekennzeichnet,**
**daß** die Gabeln (30, 130) je eine Drehplatte (31, 131) mit zwei vertikal aufragenden Lagerarmen (33, 33', 133, 133') aufweisen, zwischen denen jeweils ein Rollenkörper (40, 140) rotierbar aufgenommen ist.

4. Weiche nach Anspruch 1, **dadurch gekennzeichnet,**
**daß** die Gabeln (30, 130) zur Kopplung ihrer Schwenkbewegungen mit mindestens einer gemeinsamen Koppelstange (9) gelenkig verbunden sind

5. Weiche nach Anspruch 3 und 4, **dadurch gekennzeichnet,**
**daß** die Drehplatten (31, 131) über einen etwa horizontal ausragenden Hebel (38) mit der Koppelstange (9) verbunden sind.

6. Weiche nach Anspruch 1, **dadurch gekennzeichnet,**
**daß** der Rollenkörper (40, 140) als Felge (41, 141) ausgebildet ist, an der mindestens ein die Felge (41, 141) reifenartig umgebender, die Lauffläche für das Fördergut (10) mitbildender Radreifen (43, 43', 143, 143') angeordnet ist.

7. Weiche nach Anspruch 1, **dadurch gekennzeichnet,**
**daß** der Rollenkörper (40, 140) eine gegenüber seinen Außenflächen der Radreifen (43, 43', 143, 143') versenkte Riemenscheibe (46) aufweist.

8. Weiche nach Anspruch 6 und 7, **dadurch gekennzeichnet,**
**daß** die Felge (41, 141) zwei von einander beabstandete Felgenbetten (42,42') aufweist, an denen jeweils ein die Felge (41, 141) reifenartig umgebender, die Lauffläche für das Fördergut (10) mitbildender Radreifen (43, 43', 143, 143') angeordnet ist, wobei die Riemenscheibe (46) zwischen den Radreifen (43, 43', 143, 143') angeordnet ist.

9. Weiche nach Anspruch 1, **dadurch gekennzeichnet,**
**daß** die Lagerböcke (20) nebeneinander beabstandet auf einer sich quer zur Förderrichtung des Hauptfbrderers (1) erstreckenden Tragkonsole (52, 52a) angeordnet sind.

10. Weiche nach Anspruch 1, **dadurch gekennzeichnet,**
**daß** die Rollenkörper (40, 140) angetrieben sind.

11. Weiche nach Anspruch 10, **dadurch gekennzeichnet,**
**daß** der Antrieb der Rollenkörper (40, 140) durch je einen um die Riemenscheibe (46) geführten Treibriemen (47) erfolgt.

12. Weiche nach Anspruch 10 oder 11, **dadurch gekennzeichnet,**
**daß** die Rollenkörper (40, 140) durch eine gemeinsame Antriebswelle (50) angetrieben sind.

13. Weiche nach Anspruch 5 und 11, **dadurch gekennzeichnet,**
**daß** die Drehplatte (31, 131) eine dem Hebel (38) zugewandte Aussparung (31a) und der Hebel (38) eine der Drehplatte(31, 131) zugewandte Aussparung (38a) aufweist, wobei der Treibriemen (47) durch den aufgrund der Aussparungen (31a, 38a) gebildeten Zwischenraum zwischen Drehplatte (31, 131) und Hebel (38) geführt ist.

14. Weiche nach mindestens einem der vorstehenden Ansprüche,
**dadurch gekennzeichnet, daß** mit Hilfe einer Mehrzahl von Rollenkörpern (40, 140), die jeweils mittels einer um eine vertikale Achse schwenkbar gelagerte Gabel (30, 130) rotierbar gelagert sind, ein Weichenfeld ausgebildet ist.

## Claims

1. Points for a feeding system especially for a gravity roller table which is switchable between a straight out position and a deflection position for deflecting of transport goods from a main conveyor to a lateral conveyor branching from the main conveyor, comprising a group of roller bodies with horizontally running rotation axes, wherein the roller bodies (40, 140) are disposed rotatable around their rotation axes at in each case a fork (30, 130) and wherein each fork (30, 130) exhibits a bearing bolt (36) disposed vertical downwardly projecting from the fork (30, 130), which bearing bolt (36) is introduced from the top into a vertically disposed, on the top open bearing bushing (24,24a, 124) of a bearing block (20, 120) not participating in the swivel motion, such that the fork (30, 130) is swivelable supported between a first position and a second position around the vertical swivel axis in the bearing block (20, 120), wherein the points (3) is disposed in the straight out position in case the forks (30, 130) are disposed in each case in the first position and wherein the points (3) is disposed in the deflection position, in case the forks (30, 130) are disposed in each case in the second position, wherein the forks (30, 130) are lifted such by the lift mechanism during the swiveling from the first position into the second position that the transport materials (10) are at least partially lifted relative to the transport system by at least one of the roller bodies (40, 140) upon passage of the points (3)
**characterized in that**
- either the fork (30) exhibits a head plate (35) exhibiting recesses (72) at its lower side (11) and is disposed in the end region of the bearing bolt (36) and wherein the wall of the bearing bushing (24) is limited on its top by an upper front face (25) exhibiting projections (76), wherein the bearing bolt (36) is introduced from the top into the bearing bushing (24) for a swivelable support of the fork (30) around a vertical axis and wherein the lower side (11) rests on the upper front face (25), wherein the projections (76) and the recesses (72) are disposed such that the projections (76) engage into the recesses (72) in the first position of the fork (30) and do not engage in the second position of the fork (30) into the recesses (72) such that the fork (30) is disposed in the second position in a lifted position relative to its position in the first position by the depth of the recesses (72) or the height of the projections (76),
- or
the fork (30) exhibits a head plate (35a) disposed in the upper end region of the bearing bolt (36), wherein the lower side (12) of the head plate (35a) is plane and inclined relative to a horizontal, and wherein the wall of the bearing bushing (24a) is limited on the top by a plane upper front face (26) inclined relative to a horizontal, wherein the bearing bolt (36) is introduced from the top into the bearing bushing (24) for a swivelable support of the fork (30) around the vertical axis and wherein the lower side (12) rests on the upper front face (26), wherein the spatial position of the lower side (12) and of the upper front face (26) are oriented such relative to each other that the fork (30) is disposed in the second position in a lifted position relative to its position in the first position,
- or
the bearing block (120) exhibits recesses (82) and the fork (130) exhibits a rotary plate (13 1) with projections (86), wherein the rotary plate (131) rests on the upper front face of the bearing bush (124) and wherein the projections (86) engage into the recesses (82) in the first position of the fork (130) and wherein the projections (86) in the second position of the fork (130) rest on the bearing block (120) outside of the recesses (82) such that the fork (130) is disposed in the second position in a lifted position relative to the position in the first position by the depth of the recesses (82) or by the height of the projections (86).

2. Points according to claim 1 **characterized in that** the projections (72, 86) are formed by the heads of rivets or screws.

3. Points according to at least one of the preceding claims, **characterized in**
**that** the forks (30, 130) exhibit each one rotary plate (31, 131) with two vertically projecting bearing arms (33, 33', 133, 133'), wherein in each case a roller body (40, 140) is rotatably received between the bearing arms (33, 33', 133,133').

4. Points according to claim 1 **characterized in**
**that** the forks (30, 130) are connected hinged to at least one common coupling rod (9) for coupling of their swivel motions.

5. Points according to claim 3 and 4 **characterized in**
**that** the rotary plates (31, 131) are connected to the coupling rod (9) through a lever (38) projecting about horizontally.

6. Points according to claim 1 **characterized in**
**that** the roller body (40, 140) is formed as a wheel rim (41, 141), wherein at least one wheel tire (43, 43', 143, 143') surrounding the wheel rim (41, 141) like a tire and co-forming the running face for the transport goods (10) is disposed at the wheel rim (41, 141).

7. Points according to claim 1 **characterized in**
**that** the roller body (40, 140) exhibits a pulley (46) recessed relative to the outer faces of the wheel tires (43,43', 143,143').

8. Points according to claim 6 and 7 **characterized in**
**that** the wheel rim (41, 141) exhibits to wheel rim beds (42,42') disposed at a distance from its other, wherein the wheel tire (43,43',143,143') is tirelike surrounding the wheel rim (41,141) and co-forming the running face for the transport goods (10), wherein the pulley (46) is disposed between the wheel tires (43, 43', 143, 143').

9. Points according to claim 1 **characterized in**
**that** the bearing blocks (20) are disposed at a distance next to each other on a support console (52, 52a) extending perpendicular to the transport direction of the main conveyor (1).

10. Points according to claim 1 **characterized in**
**that** the roller bodies (40, 140) are driven.

11. Points according to claim 10 **characterized in**
**that** the drive of the roller bodies (40, 140) is performed by in each case one drive belt (47) led around the pulley (46).

12. Points according to claim 10 or 11 **characterized in**
**that** the roller bodies (40, 140) are driven by a joint drive shaft (50).

13. Points according to claim 5 and 11 **characterized in**
**that** the rotary plate (31, 131) exhibits a recess (31a) disposed toward the lever (38) arid the lever (38) exhibits a recess (3 8a) disposed toward the rotary plate (3 1, 131), wherein the drive belt (47) is led through the intermediate space between the rotary plate (31, 131) and the lever (38) formed based on the recesses (31a, 38a).

14. Points according to at least one of the preceding claims **characterized in**
**that** the field of points is formed with the aid of a plurality of roller bodies (40, 140), which in each case are supported rotatably by way of a fork (30, 130) swivelably supported around the vertical axis.

## Revendications

1. Mécanisme d'aiguillage pour système de transport, notamment pour transporteur à rouleaux, convertible entre une position en ligne droite et une position de renvoi pour renvoyer les produits à transporter d'un transporteur principal à un transporteur secondaire qui bifurque à partir du transporteur principal, comprenant un groupe de corps de rouleaux avec des axes de rotation à l'horizontale, les corps de rouleaux (40, 140) étant disposés chacun à une fourche (30,130) de façon à pouvoir tourner autour de leurs axes de rotation et chaque fourche (30,130) présentant un axe de palier (36) disposé à la verticale en s'éloignant de la fourche (30, 130) vers le bas, lequel est introduit depuis le haut dans un coussinet (24, 24a, 124) d'un support de palier (20, 120) ne participant pas au mouvement tournant, de sorte que la fourche (30, 130) est logée dans le support de palier (20, 120) de façon à pouvoir pivoter autour d'un axe de pivotement vertical entre une première et une deuxième position, le mécanisme d'aiguillage (3) se trouvant dans la position en ligne droite lorsque chacune des fourches (30, 130) se trouve dans la première position et le mécanisme d'aiguillage (3) se trouvant dans la position de renvoi lorsque chacune des fourches (30, 130) se trouve dans la deuxième position, les fourches (30, 130) étant élevées au cours du pivotement de la première dans la deuxième position par un mécanisme de levage, de sorte que le produit à transporter (10), en franchissant l'aiguillage (3), est soulevé par au moins l'un des corps de rouleaux (40, 140) tout au moins en partie par rapport au système de transport, **caractérisé en ce que**
- ou bien la fourche (30) présente une plaque de tête (35) disposée dans la zone d'extrémité supérieure de l'axe de palier (36) présentant en son côté de dessous (11) des cavités (72) et la paroi du coussinet (24) étant limitée en haut par une surface frontale supérieure (25) présentant des bombages (76), l'axe de palier (36) étant introduit depuis le haut dans le coussinet (24) pour le logement de la fourche (30) pivotant autour d'un axe vertical et le côté inférieur (11) prenant appui sur la face frontale supérieure (25) seulement dans la première position, les bombages (76) et les cavités (72) étant disposées de façon à ce que les bombages (76) dans la première position de la fourche (30) aient prise dans les cavités (72) et dans la deuxième position de la fourche n'aient pas prise dans les cavités (72), de sorte que la fourche (30) dans la deuxième position se trouve dans une position élevée correspondant à la profondeur des cavités (72) ou à la hauteur des bombages (76) par rapport à sa position dans la première position,
- ou la fourche (30) présente disposée dans la zone de l'extrémité supérieure de l'axe de palier (36) une plaque de tête (35a) dont le côté de dessous (12) est plan et incliné par rapport à l'horizontale, et la paroi du coussinet de palier (24a) est limitée en haut par une surface frontale (26) supérieure inclinée par rapport à l'horizontale, l'axe de palier (36) étant introduit depuis le haut dans le coussinet de palier (24) pour le logement pivotant de la fourche (30) autour d'un axe vertical, et le côté de dessous (12) ne prenant appui sur la surface frontale supérieure (26) que dans la première position, les positions dans l'espace du côté de dessous (12) et de la surface frontale supérieure (26) étant orientées l'une vers l'autre de sorte que la fourche (30) dans la deuxième position se trouve dans une position élevée par rapport à sa position dans la première position,
- ou bien le support de palier (120) présente des cavités (82) et la fourche (130) une plaque tournante (131) avec des bombages (86), la plaque tournante (131) prenant appui sur la surface frontale supérieure du coussinet (124) seulement dans la première position et les bombages (86) ayant prise dans les cavités (82) dans la première position de la fourche (130) et dans la deuxième position de la fourche (130) prenant appui sur le support de palier (120) à l'extérieur des cavités (82), de sorte que la fourche (130) dans la deuxième position, se trouve dans une position surélevée par rapport à sa position dans la première position de l'ordre de la profondeur des cavités (82) ou de la hauteur des bombages (86).

2. Mécanisme d'aiguillage selon la revendication 1, **caractérisé en ce que**
les bombages (72, 86) sont formés par les têtes de rivets ou de vis.

3. Mécanisme d'aiguillage selon au moins l'une des revendications ci-avant,
**caractérisé en ce que** les fourches (30, 130) présentent chacune une plaque tournante (31, 131) avec deux bras de paliers s'élevant à la verticale (33, 33', 133, 133'), entre lesquels un corps de rouleaux (40, 140) est respectivement logé de façon à pouvoir effectuer un mouvement de rotation.

4. Mécanisme d'aiguillage selon la revendication 1, **caractérisé en ce que**
les fourches (30, 130) sont reliées par assemblage articulé par au moins une barre de couplage (9) commune pour le couplage de leur mouvement de pivotement.

5. Mécanisme d'aiguillage selon les revendications 3 et 4, **caractérisé en ce que**
les plaques tournantes (31,131) sont reliées à la barre de couplage (9) par un levier (38) qui s'élève à peu près à l'horizontale.

6. Mécanisme d'aiguillage selon la revendication 1, **caractérisé en ce que**
les corps de rouleaux (40, 140) sont conformés comme une jante (41, 141) sur laquelle est disposé au moins un bandage de roue (43, 43', 143, 143') formant la surface de passage du produit à transporter (10) et entourant la jante (41, 141) comme un pneu.

7. Mécanisme d'aiguillage selon la revendication 1, **caractérisé en ce que**
le corps de rouleau (40, 140) présente une poulie (46) affleurant les surfaces extérieures des bandages de roue (43, 43', 143, 143').

8. Mécanisme d'aiguillage selon les revendications 6 et 7, **caractérisé en ce que**
la jante (41, 141) présente deux embases de jantes (42, 42') espacées l'une de l'autre, sur chacune desquelles est disposé un bandage de roue (43, 43', 143, 143') formant la surface de passage de la pièce à transporter (10) et entourant la jante (41, 141) comme un pneu, la poulie (46) étant disposée entre les bandages de roues (43, 43', 143, 143').

9. Mécanisme d'aiguillage selon la revendication 1, **caractérisé en ce que**
les supports de paliers (20) sont disposés espacés les uns des autres sur une console (52, 52a) s'étendant dans le sens transversal au sens de transport du système de transport principal (1).

10. Mécanisme d'aiguillage selon la revendication 1, **caractérisé en ce que**
les corps de rouleaux (40, 140) sont actionnés par entraînement.

11. Mécanisme d'aiguillage selon la revendication 10, **caractérisé en ce que**
les corps de rouleaux (40, 140) sont entraînés chacun par une courroie d'entraînement (47) guidée par la poulie (46).

12. Mécanisme d'aiguillage selon l'une des revendications 10 ou 11, **caractérisé en ce que** les corps de rouleaux (40, 140) sont entraînés par un arbre de transmission commun (50).

13. Mécanisme d'aiguillage selon les revendications 5 et 11, **caractérisé en ce que** la plaque tournante (31, 131) présente un creux (31a) tourné vers le levier (38) et le levier (38) présente un creux (38 a) tourné vers la plaque tournante (31, 131), la courroie d'entraînement (47) étant conduite dans l'espace formé en raison des creux (31a, 38a) entre la plaque tournante (31, 131) et le levier (38).

14. Mécanisme d'aiguillage selon au moins l'une des revendications ci-avant,
**caractérisé en ce que** à l'aide d'une pluralité de corps de rouleaux (40, 140) pouvant pivoter chacun de façon à pouvoir effectuer un mouvement de rotation autour d'un axe vertical d'une fourche (30, 130) logée de façon à pouvoir pivoter, est constitué un champ d'aiguillage.
